# EUROPEAN PATENT APPLICATION

(11) **EP 2 116 588 A1**
(43) Date of publication of application: **11.11.2009**
(21) Application number: 07788567.1
(22) Date of filing: 30.05.2007
(51) Int. Cl.: C10L 1/02, C11B 1/06

(54) **METHOD FOR PRODUCTION OF A BIOFUEL AND USE THEREOF FOR VEHICLE ENGINES AND COMBUSTION INSTALLATIONS**

(30) Priority: 11.01.2007 ES 200700114
(71) Applicant: Garcia Berrocal, Eulalia, 08206 Sabadell, Barcelona (ES)
(72) Inventor: Garcia Berrocal, Eulalia, 08206 Sabadell, Barcelona (ES)
(74) Representative: Flaccus, Rolf-Dieter
(86) International application number: PCT/ES2007/000319
(87) International publication number: WO 2008/084119

(57) **Abstract**

The procedure includes the production of oils or juices obtained by pressing the seeds of oleaginous plants; the contribution of new and used outsourced oils; the mixture and homogenization of the ingredients used; the incorporation of additives and final filtering; the processing of the solid wastes generated for their recycling as by-products; application of the biofuel in vehicle motors and industrial combustion plants through the emulation of the density of gas-oil by the controlled raising of the temperature of the biofuel and the use of four biofuel conditioning modules. Recycling of the solid wastes during the production phase for energy generation and other applications.

Applicable to the industrial production of fuels of biological (plant) origin, which may be used in place of natural fossil fuels.

## Description

### PURPOSE OF THE INVENTION

The invention presented here refers to a procedure for the production of a biofuel and to its application in vehicle motors and combustion plants.

### FIELD OF THE INVENTION

This invention presented here belongs to the field of fuel production, that is, the manufacture, on an industrial scale in order to satisfy the demand of a large number of users, of combustible materials intended to be fed into diesel motors installed in vehicles and similar machines. In this case, the fuels to be produced are of biological (vegetable) origin, and may be used in place of natural fossil fuels.

### BACKGROUND OF THE INVENTION

As is generally known, the considerable increase in the consumption of fuels of mineral origin, such as petroleum and gas, to feed motor vehicles and heating plants, to generate electric power and other uses, is leading to serious concerns about the future of those supplies and the possibility of exhausting them relatively soon.

Moreover, the dependence of industry and transport on the supply of fossil fuels entails increasingly high prices, which have a notable impact on the costs of manufacturing goods of all sorts and on the provision of services, especially those that involve transporting people and products.

To deal with these problems, substitutes for mineral-based fuels have been sought, and researchers have turned to biotechnology in search of products able to contribute a potential energy capacity that is convertible into dynamic energy in vehicle motors and other industrial machines.

Vegetable oil based fuels are known, such as those described in patents JP 08 053681, JP 2004 092631 and WO 2006/095219, among others.

These documents refer to processes for preparing fuels of biological origin, and while they perform their function in certain applications, such as in certain types of motors and machines, they have drawbacks derived mainly from their incomplete interchangeability with classic fuels, and from other problems inherent in their use.

There was thus a need to have a biofuel that would be of practical use in motor vehicles and other applications in industry and transport, easy and safe to use for above-cited purposes, and which could be produced at a reasonable cost.

### ADVANTAGES OVER KNOWN PRODUCTS

As a competitive advantage, the production process proposed in support of this patent is more economical than the production of other fuels such as biodiesel, since it uses primarily physical processes. Further, the raw material used is natural, renewable and sustainable, as well as highly diversified.

### BRIEF DESCRIPTION OF THE INVENTION

In line with the purposes mentioned above, we propose the production of a new biofuel that will comply with the technical standards established for this purpose, and which can be practically applied in motor vehicles and industrial machines using conventional injection systems, and including the possibility of alternating with other fuels of the diesel and analogous types.

The biofuel obtained according to the invention corresponds to the provisions of E DIN standard 51605 or similar, and is applicable to diesel motors with common pump and fuel injection pump system.

Similarly, the biofuel proposed here can be combined, at the user's convenience, with other fuels such as diesel, biodiesel and other biofuels.

The process for producing the biofuel that is the subject of this invention is based on the collection and use of different varieties of oleaginous fruits. The pressing and refinement of these materials, as well as their industrial processing, is part of the process to be described below.

By analogy, the term "oil" shall be used henceforth to indicate the viscous liquid obtained by pressing the seeds of those oleaginous fruits.

The refining and treatment process applied to the oils of the diverse types used and the mixtures of these oils are dealt with here in support of this invention.

To facilitate the explanation, this description is accompanied by block diagrams showing, as an illustrative but not restrictive example, a case of execution of the procedure for the production of a biofuel and its application to vehicle motors and combustion plants, according to the principles stated in the claims.

### BRIEF DESCRIPTION OF THE DRAWINGS

Figure 1 is a general block diagram of the new biofuel production process employing virgin and used vegetable oils.

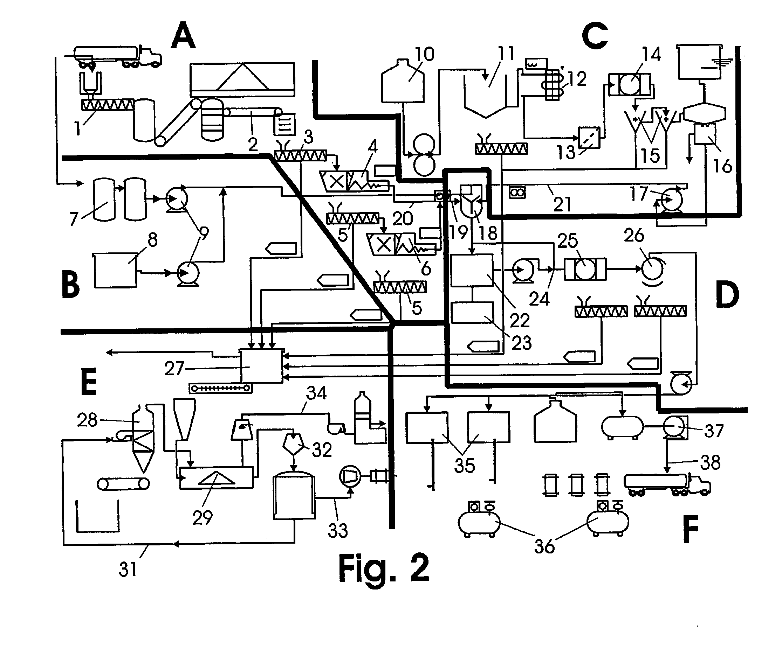

Figure 2 is a general block diagram and a detailed schematic of the production process itself.
Figures 3 to 9 are partial block diagrams, segregated from figure 2 and referenced to the process phases that will be indicated.
Figures 10 to 12 are diagrams corresponding to three modules relative to the application of the biofuel to vehicle motors and combustion plants.
Figures 13 and 14 are diagrams showing the interconnection of the plant modules with and without the recharging, respectively, of the fuel inlet circuits with conventional fuel and the new biofuel.

### DETAILED DESCRIPTION OF THE INVENTION

The biofuel production procedure is based on the use of virgin and used vegetable oils in general, through refining and mixing in specific proportions. Associated with the process is a system for the energy recycling of the wastes resulting from pressing, as well as a centralized control system that automates the process.

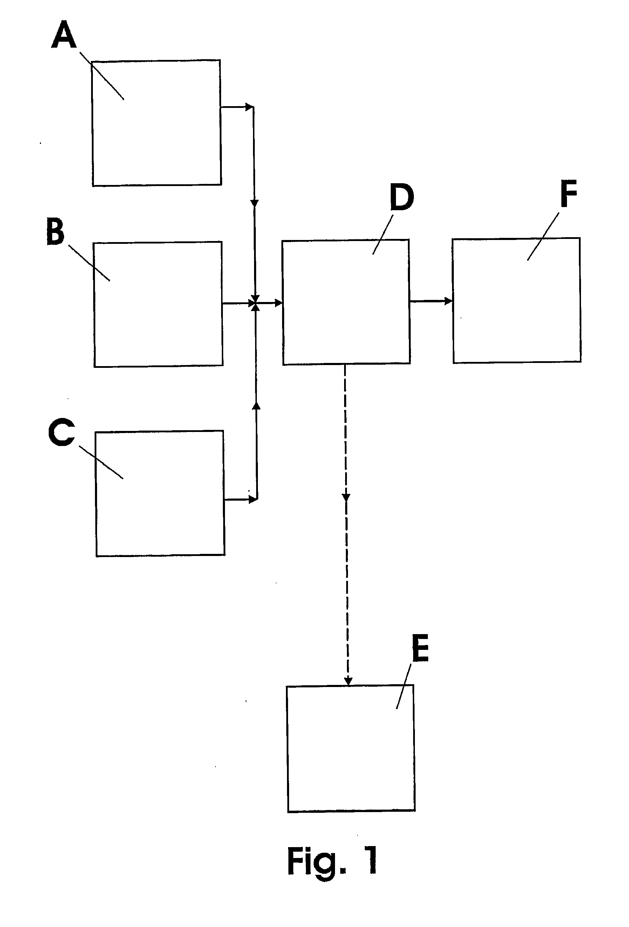

The various phases **(****fig. 1****)**, of the procedure involved in the invention can be enumerated as follows:
A. Production of the new oils or juices, obtained by pressing oleaginous seeds, for their use in the process.Solid wastes are produced.
B. Storage and reservation of new oils or juices, refined or not, produced externally or internally in the previous phase, for use in the process.
C. Refinement of externally produced used vegetable oils for use in the process. Solid wastes are produced.
D. Mixing and homogenization of new and used oils, refined or not; inclusion of additives and final refining by filtration. Solid wastes are produced.
E. Treatment of the solid wastes produced in the previous phases, with successive use of the treated wastes for three possible applications.
F. Storage and distribution of the biofuel produced so that it can be used.

Each one of the following phases includes steps which are detailed below:

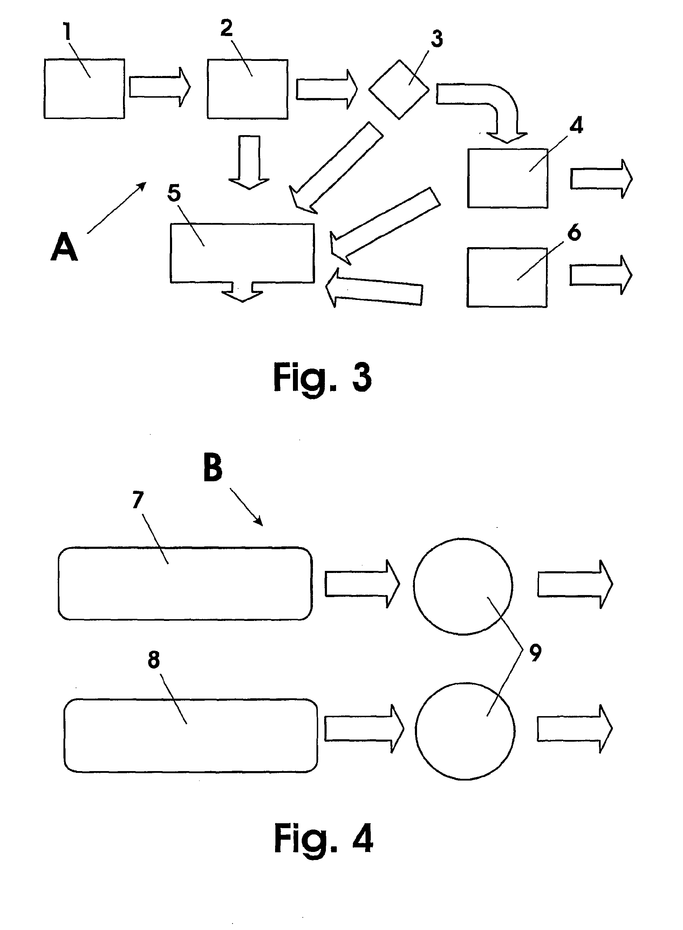

### Phase A includes (fig. 3):

step 1: reception of the raw seeds of oleaginous plants, which arrive in trucks or other means of transport and are initially poured into a special reception deposit (refrigeration);
step 2: separation of useless matter and selection of the seeds;
step 3: pre-heating and preliminary pressing of the seeds;
step 4: main pressing of the seeds, which produces an oil and a solid; the working pressure will range from 1 to 500 bar;
step 5: processing of the waste resulting from the pressing performed in steps 4 and 6;
step 6: secondary pressing of the solid resulting from the main pressing; the working pressure again ranges from 1 to 500 bar.

### Phase B includes (fig. 4):

step 7: storage of now refined oils, using transfer pumps 9; and
step 8: storage of unrefined oils, also using transfer pumps 9.

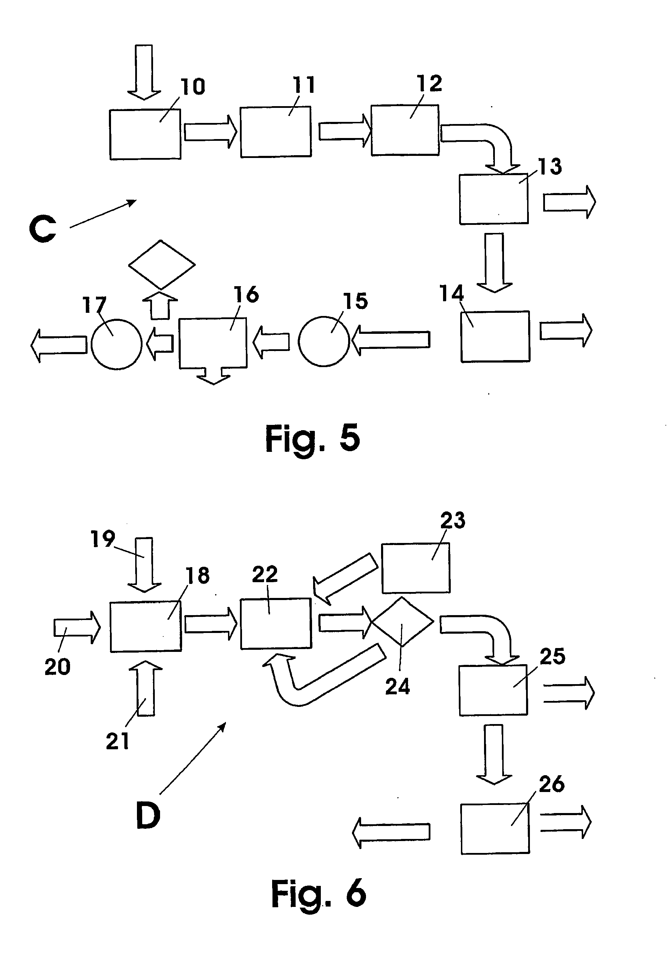

### Phase C includes (fig. 5):

step 10: reception of used vegetable oil or juice;
step 11: initial decantation to homogenize the oil;
step 12: refrigeration of the used oil;
step 13: initial filtration with filters whose pore size ranges from 10 to 20 µm;
step 14: intermediate filtration with filters whose pore size ranges from 1 to 10 µm;
step 15: settling and processing of phosphates and sulfates;
step 16: refinement of chlorides;
step 17: pumping and metering of used vegetable oil or juice;

### Phase D includes (fig. 6):

Step 18: mixing and automatic control of the various oils employed (base oil 19, refined oil 20 and refined used oil 21), utilizing homogenizing equipment 22 and an additive metering unit 23, as well as a process control system 24. The additives can be added to the mix in a proportion from 1% to 5% of an organic bactericide based on natural products, which may consist of benzylpenicillins, phenoxylpenicillins, lactic acid, hydroxylacetic acid, formic acid, cephalosporin, isoprene derivatives, aromatic compounds and similar substances. Two or more of these ingredients may be combined, or only one of them may be used;
   control step 24 allows the process to be continued or other production operations to be performed; this step may include known industrial refinement phases such as de-gumming, neutralizing, deodorizing and hibernation, enabling the product to progress afterward toward the homogenizing equipment 22;
step 25: initial filtration with filters with pore size ranging from 5 to 20 µm, under pressure ranging from 1 to 15 bar;
step 26: final filtration with filters whose pore size ranges from 1 to 10 µm, with application of pressure ranging from 1 to 15 bar;

From this point onward, the product being processed can begin to be called a biofuel.

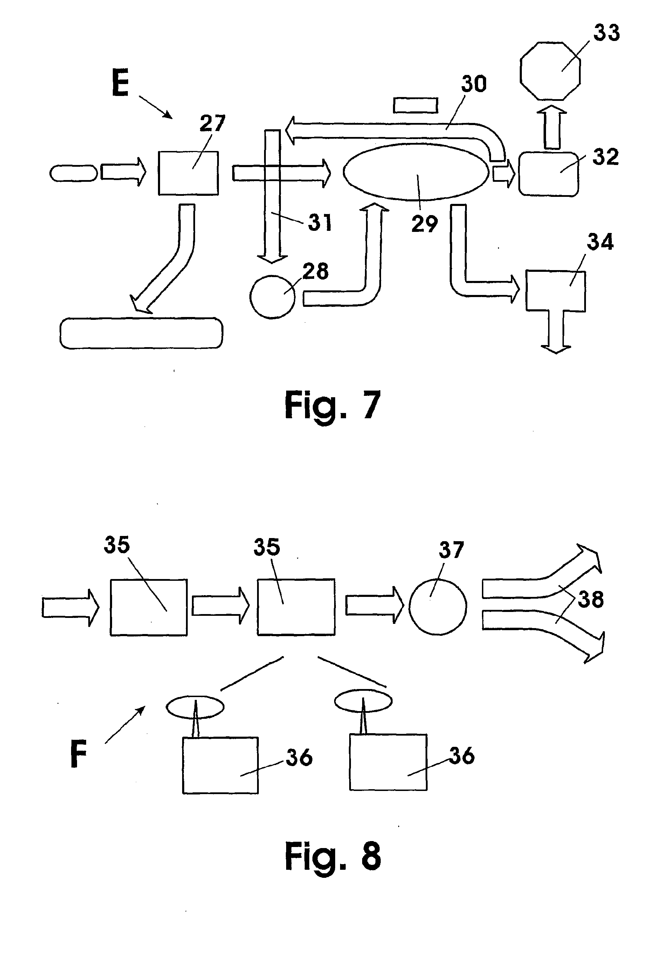

### Phase E includes (fig. 7):

step 27: bringing together all the solid wastes in a centralizing repository; the wastes can be used for gasification, recycled thermically or used as a raw material for the production of livestock feed or other industrial products;
step 28: combustion of the solids collected during the previous process in a cyclonic fuel burner and
step 29: gasification in a horizontal rotary anaerobic gasifier, with heating input consisting of the combustion gases from burner 28;
step 30: recharging of part of the output gases and ungasified liquid and solid wastes toward inlet 31. These materials consist of a solid component (carbonaceous), a viscous component (tar) and a gaseous component, part of which will assist the combustion in burner 28, while the other part will constitute
   the following step (32): processing (scrubbing) and storage of the gases produced;
   step
   33, in which the gases produced by the gasification process are sent as fuel to the gas turbine associated with an electric power generator, and heat that is useable for different purposes is cogenerated;
step 34: processing the combustion gases coming out of the burner cited in step 28 in a scrubber, for the purpose of conditioning the burner itself while cleaning emissions.

### Phase F includes (fig. 8):

step 35 (repeated): storage of the biofuel in general repositories and transfer tanks 36 (in an adequate number) in order to distribute the biofuel 38, using transfer pumps 37 and appropriate means of transport such as bulk liquid carriers to take the product to consumption points.

### THE VARIOUS PHASES OF THE MANUFACTURING PROCESS

The procedure entailed by the invention includes, as indicated in figure 1, the reception of the oleaginous seeds, their unloading into hoppers and their transport to initial equipment that selects and separates foreign matter (stones, metallic particles, etc.) using a group of screens. A cooling system is used to reduce the temperature of the seeds to below 15° C in order to avoid possible germinations.

The seeds are sent to closed production repositories, from which they move on to pre-heating and crushing equipment; the former raises their temperature to a point between 30° C and 50° C; an initial pressing is performed to produce a base product for the subsequent pressing operation to obtain new oils.

The seeds are conveyed from the repositories to the first pressing mill, which produces first press refined oil at the cited working temperature (below 50° C).

The remains of the first pressing may pass on to a second press, which produces cloudy refined oil similar to the first press oil.

This pressing system enables a daily production of 0.5 to 25 tons. The presses produce pressures of 1 to 500 bar.

The products, seeds and other oleaginous substances that can be used to produce the biofuel are primarily the following: sunflower seed, olive, soy bean, colza (rape seed), palm, sesame seed, mustard seed, coconut, jatropha, peanut, cotton seed, linseed, beet, conifer leaves such as pine needles, etc., saffron flower, castor oil, cork oak leaves, corn, used vegetable oil, animal oils and fats, refined oils, golden marigold seeds, grape seeds, walnuts, canola, safflower, babassu nuts and other oleaginous or similar products.

Two or more of these ingredients may be combined to make a biofuel;

The new (first press) oils, the outsourced new refined or unrefined oils and the used oils, also outsourced, are collected and homogenized. They receive diverse additives and undergo filtering for the final production of the biofuel.

For their part, the solid wastes resulting from the process are subjected to diverse conditioning operations that enable them to be used as by-products for various applications.

### APPLICATION OF THE BIOFUEL IN VEHICLE MOTORS

While the use of the biofuel whose preparation has been described above in vehicle motors, as well as in combustion plants, requires no modifications in the structure or configuration of the latter, it does necessitate the emulation of the density of gas-oil. This is accomplished by heating the biofuel and maintaining it at a constant temperature.

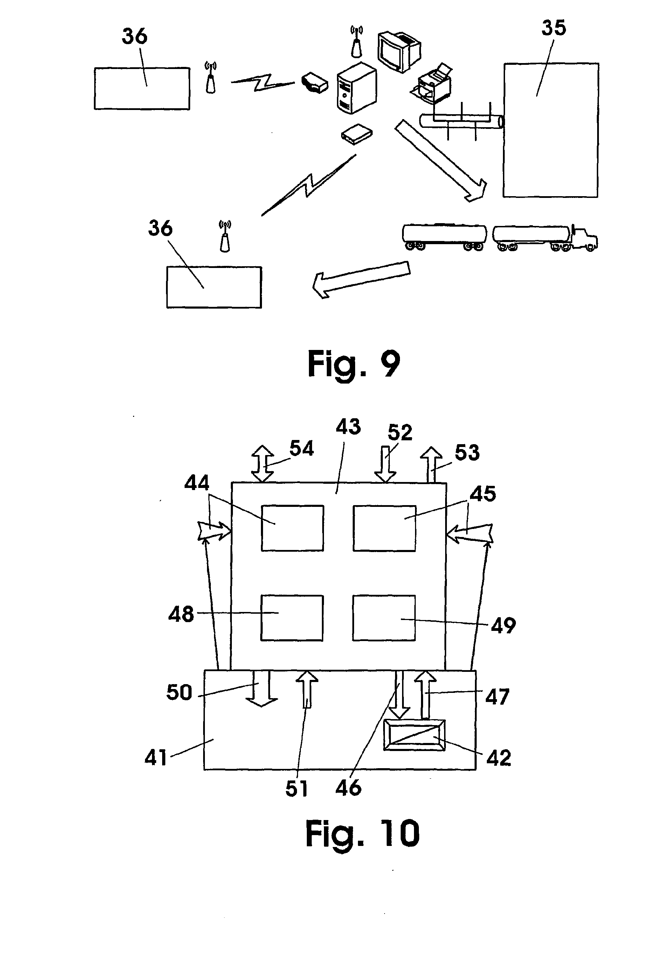

This emulation is accomplished by using modules integrated into the vehicle or plant whose motor is to be fed with the new biofuel. The modules are a tank, a filter, a selector and a control device. They are schematically shown in figures 10 to 12, which are block diagrams of the modules in question.

### DESCRIPTION OF THE APPLICATION MODULES

The structure and function of each of the four application modules can be summarized as follows:

### 1. Auxiliary tank module (figure 10).

The auxiliary tank module 43 consists of placing an additional auxiliary biofuel tank 41 (which may also be used, as required, for biodiesel or gas-oil) which is heated by a thermoregulated heat exchanger 42 fed with water from the radiator or other heat source, which may even be a battery of electrical heating elements.

The tank module 43 includes a level sensor 44, a temperature sensor 45, the heat exchanger 42 cited above and heating water return outlet 47, a biofuel temperature control device 48, a power control device 49 for an optional water pump, level signal input 44 and temperature signal input 45 through sensors installed inside the tank, biofuel outlet 50 and return 51, hot water outlet 52 and return 53, and an electric signal control and power bus 54.

The tank module 43 ensures that the temperature of the biofuel in the auxiliary tank 41 remains constantly above 20° C.

### 2. Filter module.

The filter module 40 includes a special filtering device for biofuel. The device is thermoregulated, heated by the cooling water circuit, an air-water exchanger or by some electric heating elements. Located at the output of the biofuel auxiliary tank 41, its functions are to separate the water that the tank may contain and raise the temperature of the fluid above 50° C.

When the biofuel passes through the filtering device, it is heated and loses viscosity, is separated from any water it might contain while any solid particles that may be present are retained by the filter.

The pore size of the filtering element will preferably be smaller than 10-30 µm for a motor power up to 400 HP. These filters can be used in more powerful vehicles by adding a greater number of filtering units.

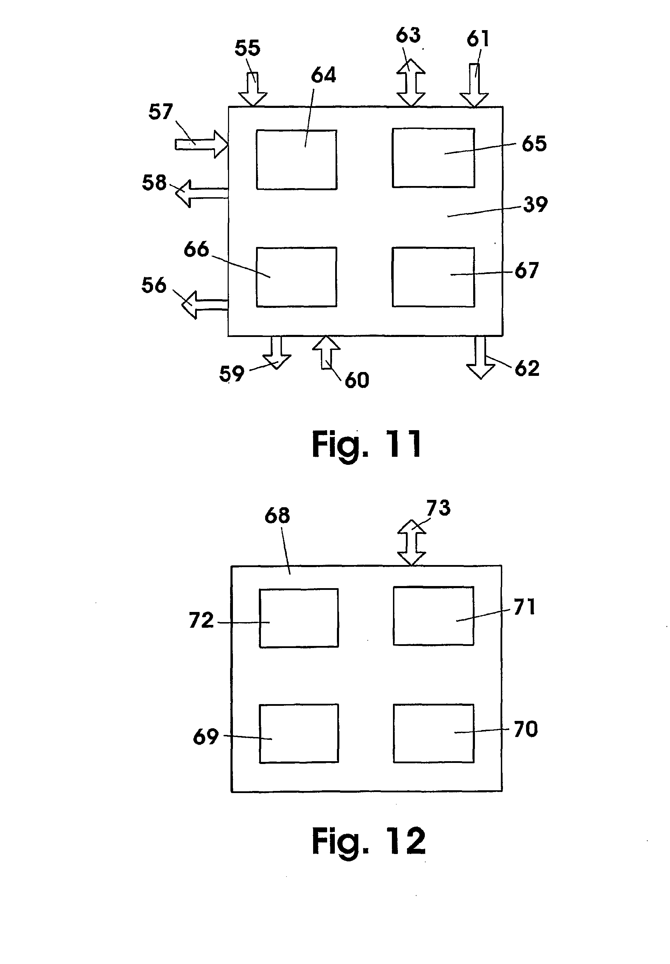

### 3. Selector module (figure 11).

The selector module 39 selects the fuel to be supplied-gas-oil, biodiesel or biofuel-according to the temperature and level control parameters, and channels it toward the injection pump or pumps. It also selects among the use of gas-oil, biodiesel or biofuel in the auxiliary tank 41 in accordance with the authorization issued by the control module (figure 12), located inside the driver's compartment of the vehicle.

If the temperature of the biofuel is correct and its use is activated by the control module, the biofuel flows into a pump or pumps and is supplied to the consumption points.

The selector module is composed of an inlet 55 and return 56 for the biofuel to the auxiliary tank, inlet 57 and return 58 for gas-oil, outlet 59 and return 60 for the injection pump or pumps, inlet 61 for the cooling circuit water and outlet 62 for the thermoregulated hot water, a control and power bus 63, a diesel or biofuel inlet control block 64, a water circuit temperature control block 65, an optional fuel catalyzer-ionizer block 66, and a selector module control and power block 67.

The fuel catalyzer-ionizer system 66 improves, when needed, the heating power and combustion of the fuel. It is based on a cylinder in which magnetic fields are applied and the passage of fuel or biofuel is forced by means of some metal elements clad with noble metals. This assembly uses the heat given off by the water circuit to favor the reaction. It is located at the outlet of the fuel / biofuel circuit toward the injection pump 59.

### Control module (figure 12)

The control module 68 is installed in the vehicle driver's compartment. It receives the signals from the various sensors associated with the auxiliary tank 41, with the selector module (figure 11) and the filter.

These signals are received and controlled by the control module, which includes:
a biofuel level control device 69 inside the auxiliary tank itself;
a device 70 that includes, in turn, three manual control devices: one to start up the system, another to choose conventional fuel (gas-oil) or to activate the use of biofuel, and the other to control the auxiliary tank for the use of a conventional fuel;
a device 71 to control the water temperature or the heating system used;
a device 72 to control the power of the fuel and / or biofuel selection; a central alarm manager; an
an electric signal input and output bus 73.

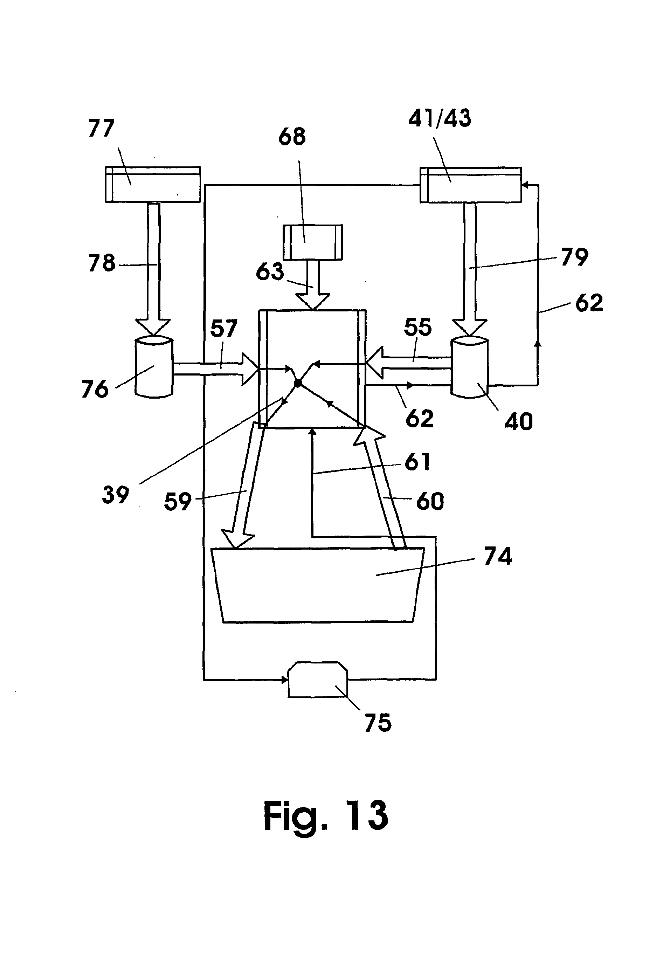

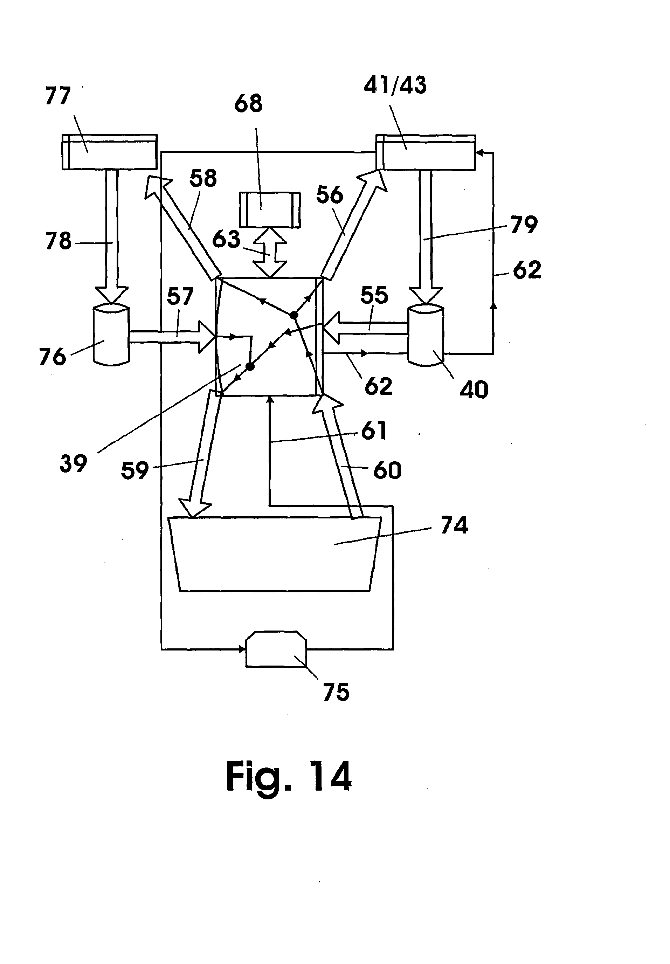

Figures 13 and 14 refer to the interconnection diagrams of the modules that control the biofuel feed into a motor through two types of circuits, with and without recharging. 39 is the selector module described above. It is equipped with a variant of the module with internal recharging, a biofuel filter 40, the auxiliary tank 41, the tank module 43, the biofuel inlet and return 55 and 56, the gas-oil inlet and return 57 and 58, the injection pump inlet and return 59 and 60, the heating water inlet and return 61 and 62, a communications bus 63 that carries the power signals, the control module 68, the injection pump 74, the vehicle radiator or heat source 75, a filter for the gas-oil 76, the gas-oil tank 77, and the circuit to carry the fuel from the tank to the filter 78.

Heat is provided to the selector module (39) from a heat source (75) though tubing (61); the infeeding of heat from the module (39) to the biofuel circuit is verified through the tubing (62) affecting the biofuel feed circuit (55), the filtering module (40), the supply circuit (79) and the module (43) associated with the tank (41), with a 'possible return of the heat contributed.

The diagrams in figures 13 and 14 differ, as can easily be seen, in that the second contains arrows 56 and 58. These connections enable the biofuel to be used in industrial vehicle motors and combustion plants.

The biofuel circuit from the auxiliary tank 41 to the filter 40 and the selector module 39 must be heated by the hot water circuit.

## Claims

1. Procedure for the production of a biofuel and application of this product to vehicle motors and combustion plants, aimed at the manufacture of fuels of biological origin able to be used as a substitute for fossil fuels, **characterized by** including the following the following phases:
A. Production of new oils or juices, obtained by pressing oleaginous seeds, with production of recyclable solid wastes;
B. Storage and reservation of new oils or juices together with refined and unrefined oils, produced externally or internally in the previous phase, for use in the process;
C.Refining of outsourced vegetable oils used in previous applications, with production of recyclable solid wastes;
D.Mixing and homogenization of new and used oils, refined or not; inclusion of additives and final refining by filtration, with production of recyclable solid wastes.
E. Treatment of the solid wastes produced in the previous phases, with successive use of the treated wastes for three possible applications:
F. Storage and distribution of the biofuel produced so that it can be used.

2. Procedure for the production of a biofuel and application of the same in vehicle motors and combustion plants, in accordance with claim 1, **characterized by** the inclusion in phase A of the following steps:
reception (1) of the raw fruits, seeds and leaves of oleaginous plants, initially stored in a refrigerated repository;
separation (2) of the useless matter accompanying the raw materials; pre-heating and preliminary pressing (3) of the seeds or fruits;
main pressing (4) of the raw materials under a pressure ranging from 1 to 500 bar, at a temperature below 50° C, resulting in an oil and a recyclable solid waste (5);
optional secondary pressing (6), according to the type of raw materials used and of the solid waste resulting from the two previous processes, at a pressure between 1 and 500 bar, at a temperature below 50° C, resulting in a recyclable solid (5);

3. Procedure for the production of a biofuel and application of the same in vehicle motors and combustion plants, in accordance with claim 1, **characterized by** the inclusion in phase B of the following steps:
storage of refined oils (7) and their transfer by transfer pumps (9) to ensure the continuity of the process;
storage of unrefined oils (8) and their transfer by transfer pumps (9) to ensure the continuity of the process;

4. Procedure for the production of a biofuel and application of the same in vehicle motors and combustion plants, in accordance with claim 1, **characterized by** the inclusion in phase C of the following steps:
reception of vegetable oils used in previous applications (10);
homogenization of the oils by decantation (11);
cooling (12) of the used oils to a temperature of 5-15° C;
initial filtering (13) of the oils using filters whose pore size ranges from 10 to 20 µm;
intermediate filtering (14) of the oils by using filters whose pore size ranges from 1 to 10 µm;
settling and reduction of phosphates and sulfates (15) that may accompany the oils;
reduction of chlorides (16) and product checking;
pumping and metering (17) of the processed oils.

5. Procedure for the production of a biofuel and application of the same in vehicle motors and combustion plants, in accordance with claim 1, **characterized by** the inclusion in phase D of the following steps:
mixing, with automatic control and metering (18), of the oils utilized, base oils and juices (19), previously stored oils (20), processed used oil (21) with the use of homogenizing equipment (22) with continuous stirring;
optional addition (23) of additives, depending on the type of raw materials used, with the use of metering equipment;
treatment and checking (24) of the oils in process with optional refining stages with de-gumming, neutralization, deodorizing and hibernation;
initial filtering (25) with filters whose pore size ranges from 5 to 20 µm;
use of pumps to apply pressure ranging from 1 to 15 bar;
final filtering (26) with filters whose pore size ranges from 1 to 10 µm;
use of pumps to apply pressure ranging from 1 to 15 bar;
transfer of the biofuel to storage tanks.

6. Procedure for the production of a biofuel and application of the same in vehicle motors and combustion plants, in accordance with claim 1, **characterized by** the inclusion in phase E of the following steps:
processing of all the solid wastes resulting from the previous steps, which are first gathered together in a centralizing repository (27), performing at least one of the following processes:
i. combustion of the wastes with generation of heat (which is reusable in the process), gases and smoke, as well as solid waste;
ii. gasification of the wastes, using a horizontal rotary gasifier (29) and a cyclonic burner (28) to provide heat, with production of combustible gas and solid and liquid wastes (30) (reusable in the burner that furnishes heat to the gasification process itself) (31); scrubbing and storage (32) of part of the gas for conveyance to a gas turbine associated with an electric power generator (33), and return (30) of another part of the gas to the heat-providing burner; production in the burner of gases that, after being treated (34), can be emitted into the atmosphere because their pollutant contents are below the admissible legal limits.
iii. conversion, through physical and / or chemical operations, of the wastes in order to reuse them in other industrial applications.

7. Procedure for the production of a biofuel and application of the same in vehicle motors and combustion plants, in accordance with claim 1, **characterized by** the inclusion in phase F of the following steps:
storage of the biofuel obtained in phase D in general tanks (35) for their subsequent transfer (37) and distribution (38), in transfer tanks (36) in order to obtain an optimum energy yield from the process by using the updated information on the levels in the transfer tanks by means of communications systems such as GPRS and similar systems;

8. Procedure for the production of biofuel and application of this product to vehicle motors and combustion plants, according to claim 5, **characterized by** the fact that the additives that are added to the oils during their processing include benzylpenicillins, phenoxylpenicillins, lactic acid, hydroxylacetic acid, formic acid, cephalosporins, isoprene derivatives, aromatic compounds and similar substances. Two or more of these ingredients may be combined, or only one of them may be used.

9. Procedure for the production of a biofuel and application of this product to vehicle motors and combustion plants, according to claims 1 to 8, **characterized by** the fact that the application of the biofuel obtained to vehicle motors, without modifying the structure nor the configuration of those motors, is verified by heating the biofuel and maintaining its temperature at a constant value, preferably above 50° C, and its conditioning through the use of four functional modules.

10. Procedure for the production of a biofuel and application of this product to vehicle motors and combustion plants, according to claim 9, **characterized by** the fact that the first of the functional modules (43) includes an additional biofuel tank (41) with heat furnished by a thermoregulated heat exchanger (42) and the incorporation of level sensors (44) temperature sensors (45), controls (49) governing heat exchanger water, the biofuel temperature (48) and the water pump power, as well as a bus (54) transporting electric signals.

11. Procedure for the production of a biofuel and application of this product to vehicle motors and combustion plants, according to claim 9, **characterized by** the fact that the second (40) of the functional modules includes a special filtering device for the biofuel, whose pore size is preferably less than 10-30 µm. This device is thermoregulated and heated by a heat carrier such as the cooling water of an exchanger, with the result of elimination of any water that might be present in the biofuel and the raising of the biofuel temperature to more than 50° C.

12. Procedure for the production of a biofuel and application of this product to vehicle motors and combustion plants, according to claim 9, **characterized by** the fact that the third (39) of the functional modules includes devices (64) for the selection of fuel and biofuel supply to the motor according to the temperature control and biofuel level parameters, toward the motor cylinder injection pump or pumps, and the control of the use (65) of conventional fuel in the auxiliary tank (41) of the first module (43), according to the authorization sent from the control module (68) installed in the driver's compartment of the vehicle.

13. Procedure for the production of a biofuel and application of the same in vehicle motors and combustion plants, in accordance with claim 9, **characterized by** the fact that the fourth (68) of the functional modules includes:
a device (69) which controls the level of biofuel in the auxiliary deposit (41) of the first module (43);
a control device (70) for starting up the conventional fuel selection system (57) and for activating the use of the biofuel (55) toward the injection pump or pumps (74), and to control the auxiliary tank (41) so that it can be used with conventional fuel, and an alarm control system;
devices (71) to control the temperature of the heating apparatus used and fuel selection power devices (72) ;
an input / output bus (73) to transport the electric control and power signals of the previously mentioned devices.

14. Procedure for the production of a biofuel and application of this product to vehicle motors and combustion plants, according to claims 9 to 13, **characterized by** the fact that the interconnection of the four modules controlling the feeding of biofuel to a motor is accomplished without recharging, through the installation of a module system (43) and an auxiliary tank (41) to condition the initial characteristics for its use;
a module (43) of the auxiliary tank (41) and the biofuel supply, through circuit (79), toward the filtering module (40), and from this module through circuit (55), supply to the selector module (39);
supply of conventional fuel stored in the tank (77), through circuit (78), toward a filter (76) and toward the selector module (39) via circuit (57);
the supply, through the selector module (39), of conventional fuel (57) and, as appropriate, biofuel (55), toward the injection pump or pumps (74), through a circuit (59), with the entire system under the supervision of the control module (68), which manages the physical parameters of the biofuel and the return of the fuel through a circuit (60).

15. Procedure for the production of a biofuel and application of this product to vehicle motors and combustion plants, according to claim 14, **characterized by** the fact that, for the interconnection of the control modules for feeding the biofuel to a motor with recharging, the link is verified between the selector module (39) and the module (41) and the auxiliary tank (43), on one hand, through a direct circuit (56); and between the selector module (39) and the gas-oil tank (77), on the other hand, through a direct circuit (58).

16. Procedure for the production of a biofuel and application of this product to vehicle motors and combustion plants, according to claims 14 and 15,
**characterized by** the fact that the supply of heat from a source (75) is accomplished through circuit (61) to the selector module (39); the provision of heat from module (39) to the biofuel circuit is verified through the circuit (62) affecting the biofuel circuit (55), the filtering module (40), the supply circuit (79) and the module (43) associated with the tank (41), with possible return of the heat furnished.

17. Procedure for the production of a biofuel and application of this product to vehicle motors and combustion plants, according to claims 14 and 15, **characterized by** the provision of a fuel catalyzer-ionizer device (66) installed in the selector module (39) located at the fuel / biofuel outlet toward the injection pump or pumps (74).

18. Procedure for the production of a biofuel and application of this product to vehicle motors and combustion plants, according to one of the preceding claims, **characterized by** the fact that the selector module (39) is equipped, in its interior, in the case of interconnection with recharging, with a double-star dual circuit for the conveyance of fluids, and in the case of interconnection without recharging, one single-star circuit.
